# EUROPEAN PATENT SPECIFICATION

(11) **EP 0 408 008 B1**
(45) Date of publication and mention of the grant of the patent: **15.03.1995**
(21) Application number: 90113270.4
(22) Date of filing: 11.07.1990
(51) Int. Cl.: E02F 9/16

(54) **Seat device for very small size shovel car**
Sitzvorrichtung für einen Löffelbagger
Siège pour petite pelleteuse

(30) Priority: 13.07.1989 JP 180824/89
(43) Date of publication of application: 16.01.1991
(73) Proprietor: KABUSHIKI KAISHA KOBE SEIKO SHO also known as Kobe Steel Ltd., Kobe 651 (JP)
(72) Inventor: Murakami, Yoshiaki, Tobecho, Iyo-gun, Ehime-ken (JP); Nishihara, Seiji, Tobecho, Iyo-gun, Ehime-ken (JP)
(74) Representative: Tiedtke, Harro, Dipl.-Ing.

(56) References cited:
- DE-C- 762 889
- FR-A- 934 307
- US-A- 2 740 462
- US-A- 3 393 009

## Description

This invention relates to a seat devise according to the preamble of claim 1 as shown in the application US 2,740,462 and more particularly to a seat device for a very small shovel car wherein, when a seat is not used, it is retracted from a predetermined position so that it may not make an obstruction to an operation of the shovel car.

### Description of the Prior Art

A very small size shovel car has not be put into practical use which can be transported into a narrow alley or the like to perform civil engineering working such as ditch excavation. However, if it is intended to produce such very small size shovel car, then it can be considered that a cage should not be provided on such shovel car but a seat should provided at a rear portion of a car body of the shovel car in order to reduce the car body as small as possible.

Since such seat for a very small size shovel car extends rearwardly from the car body, the seat will make an obstruction upon transportation or the like of the very small size shovel car by a transporting vehicle. Meanwhile, since the very small size shovel car is provided on the assumption that it is used for a narrow working area as a condition in use, it may be sometimes necessary to make a rear overhang as small as possible.

### SUMMARY OF THE INVENTION

Accordingly, it is an object of the present invention to provide a seat device for a very small size shovel car which does not extend, when it is not used. rearwardly from a car body of the shovel car to improve the handling facility and the operability of the shovel car.

In order to achieve the object, according to the present invention, there is provided a seat device for a very small size shovel car wherein an operating boom is mounted for pivotal motion on a front portion of a car body while an engine and a transmission case are mounted on a rear portion of the car body, which comprises a support element mounted at a rear lower portion of the car body, a seat, a support post having the seat secured to the top end thereof, the support post being mounted on the support element for pivotal motion between an operative position in which the support post is directed upwardly rearwardly and a seat face of the seat is directed upwardly to allow an operator to be seated thereon and an inoperative position in which the support post extends vertically upwardly along the car body of the shovel car and the seat face of the seat is directed rearwardly, and securing means for securing the support post at the operative and inoperative positions.

With the seat device, the support element for the support post for the seat is located at the rear lower portion of the car body of the very small size shovel car. The support post mounted on the support element extends rearwardly upwardly and is formed such that an operator may be seated on the seat mounted at the top end of the support post in order to operate the very small size shovel car.

The support post can be pivoted forwardly from the operative position to the inoperative position in which it extends vertically upwardly along the car body and the seat is located near a rear portion of the car body and the seat face of the seat is directed rearwardly. At the inoperative position, the support post can be secured by the securing means.

In this instance, the support post may be mounted for pivotal motion either around a horizontal axis at a top end portion of the support element or around an obliquely rearwardly inclined axis provided by the support element. Where the support post is mounted for pivotal motion around a horizontal axis, when the seat device is not to be used, the support post is pivoted forwardly from the operative to the inoperative position around the horizontal axis and then secured by the securing means together with the seat with the seat face directed rearwardly. On the other hand, where the support post is mounted for pivotal motion around an obliquely rearwardly inclined axis, an upper portion of the support post may be bent obliquely laterally with respect to the other lower portion of the support post which extends along the obliquely rearwardly inclined axis. Thus, when the seat device is not to be used, the support post is pivoted by 180 degrees in the clockwise or counterclockwise direction around the obliquely rearwardly inclined axis whereupon the seat is turned over from a position at which an operator can be seated on the seat to another position near the rear wall of the car body, and the seat is then secured to such folded position together with the support post by the securing means.

Since the seat which extends rearwardly from the car body when the support post is at the operative position can be folded as described above, it will not deteriorate the mobility of the shovel car in a narrow working area or the like. Further, since the seat in the folded position has its seat face directed rearwardly to an operator, even if the operator collides in error with the seat, there is no possibility of an injure or the like, and the safety is assured.

The above and other objects, features and advantages of the present invention will become apparent from the following description and the appended claims.

### BRIEF DESCRIPTION OF THE DRAWINGS

Fig. 1 is a side elevational view of a very small size shovel car in which a seat device according to the present invention is incorporated;
Fig. 2 is an enlarged side elevational view, partly broken, showing the seat device mounted on the very small size shovel car shown in Fig. 1; and
Fig. 3 is a similar view but showing another seat device to which the present invention is applied.

### DETAILED DESCRIPTION OF THE PREFERRED EMBODIMENTS

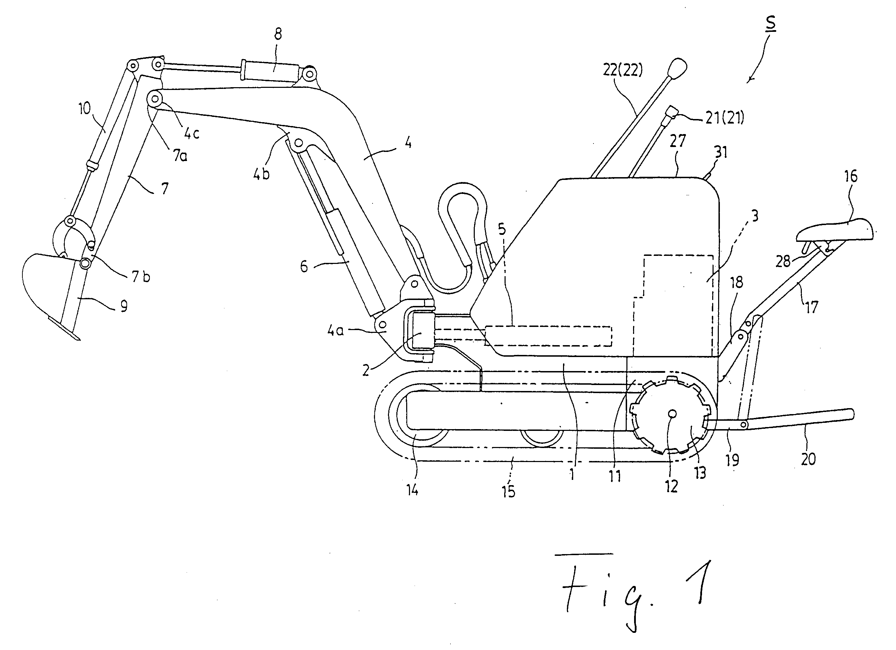

Referring first to Fig. 1, there is shown a very small size shovel car in which a seat device according to the present invention is incorporated. The very small size shovel car is generally denoted at S and includes a frame 1, a mounting section 2 for an operating boom 4 mounted provided at a front portion of the frame 1, and an engine 3 placed at a rear portion of the frame 1. The boom 4 includes a swing bracket 4a mounted on the mounting section 2. The boom 4 is swung leftwardly and rightwardly by a swing cylinder 5 mounted at a right-hand side portion of the frame 1 and is pivoted upwardly and downwardly by a boom cylinder 6 interposed between the swing bracket 4a and an intermediate portion 4b of the boom 4. An arm 7 is mounted at an end portion 7a thereof for pivotal motion at an end 4c of the boom 4 such that it is pivoted upwardly and downwardly by an arm cylinder 8 interposed between the intermediate portion 4b of the boom 4 and the end portion 7a of the arm 7. A bucket 9 is mounted for pivotal motion at the other end 7b of the arm 7 such that the bucket 9 is pivoted by a bucket cylinder 10.

A transmission case 11 is securely mounted on the frame 1 below the engine 3. A drive shaft 12 extends from the opposite sides of the transmission case 11, and a pair of drive sprocket wheels 13 are mounted at the opposite left and right end portions of the drive shaft 12. A pair of driven wheels 14 are mounted for rotation at left and right portions of a lower front portion of the frame 1, and a pair of crawlers 15 extend between and around the driven wheels 14 and the driving sprocket wheels 13.

A support element or portion 18 for a support post 17 for a seat 16 is mounted on and extends obliquely rearwardly upwardly from a rear wall of the transmission case 11, and the support post 17 is mounted for forward pivotal motion on the support portion 18. A bracket 19 is also mounted on and extends rearwardly from a lower portion of the transmission case 11, and a step plate 20 is mounted for pivotal motion on the bracket 19 such that it may be folded as indicated by chain lines when it is not to be used.

When the very small size shovel car S is to be operated, an operator is first seated on the seat 16 with its feet placed on the step plate 20 and then operates a pair of running levers 21 to drive the crawlers 15 to move the shovel car S to move forwardly or backwardly, and when an excavating operation is to be performed, the boom 4, arm 7 and bucket 9 are operated by way of a pair of operating levers 22.

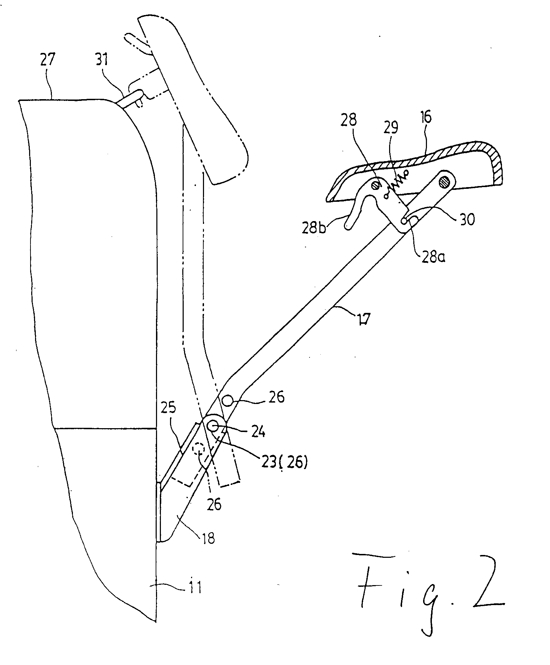

However, the seat 16 which extends rearwardly from the frame 1 sometimes makes an obstruction to an operation depending upon operating conditions. In such case, the seat 16 and the step plate 20 are folded as indicated in phantom in Figs. 2 and 1, respectively, and the operator stands behind the car body and performs such operation as described above.

Referring now to Fig. 2, construction of the seat 16, support post 17 and support portion 18 is shown more in detail. The support post 17 is mounted for pivotal motion in forward and backward directions between an operative position and an inoperative position indicated by solid lines and in phantom in Fig. 2, respectively, around a horizontal axis provided by a pin 24 which is inserted in a hole 23 perforated at an upper end portion of the support portion 18 mounted on the rear wall of the transmission case 11. A lower end portion of the support post 17 abuts with and is held by a stopper 25 securely provided on a front side of the support portion 18 to limit rearward pivotal motion of the support post 17 to stop the seat 16 at a predetermined position. The support post 17 has a plurality of, three in the embodiment shown, pin fitting holes 26 perforated therein. Thus, the height or vertical location of the seat 16 can be adjusted by aligning an arbitrary one of the pin fitting holes 26 with the hole 23 of the support portion 18 and fitting the pin 24 into the thus aligned pin fitting hole 26 and hole 23. Since the support portion 15 and the stopper 25 extend obliquely upwardly rearwardly when the height or vertical location of the seat 16 is adjusted, also the distance between the seat 16 and a bonnet 27 of the shovel car S is adjusted simultaneously so that a knee of a tall operator will not interfere with the bonnet 27.

The seat 16 is mounted at an inner portion thereof for pivotal motion at an upper end of the support post 17. An L-shaped lever 28 is mounted for pivotal motion at another inner portion of the seat 16 and is normally urged in the counterclockwise direction in Fig. 2 by a spring 29. The lever 28 has a hook 28a formed provided at a free end portion thereof such that an arresting pin 30 mounted on a side face of the support post 17 is received in the hook 28a to secure the seat 16 at a predetermined angular position with respect to the support post 17.

However, when the seat 16 is not to be used, the other end portion 28b of the lever 28 is grasped by hand and pivoted in the clockwise direction in Fig. 2 to disengage the hook 28a of the lever 28 from the arresting pin 30, and then the seat 16 is pivoted in the clockwise direction in Fig. 2 to raise the front portion thereof upwardly. Subsequently, the support post 17 is pivoted forwardly to the inoperative position in which it extends vertically upwardly along the bonnet 27 as indicated in phantom in Fig. 2, and then the lever 28 is pivoted in the counterclockwise direction until the hook 28a thereof is engaged with a U-shaped bolt 31 mounted at an upper portion of the bonnet 27 to secure the seat 16 with respect to the bonnet 27. On the other hand, when the seat 16 is to be used, the procedure described above is performed reversely. Thus, the lever 28 is manually operated to be disengaged from the U-shaped bolt 31 and the support post 17 is tilted rearwardly, whereafter the hook 28a of the lever 28 is engaged with the arresting pin 30 of the support post 17, thereby completing setting of the seat 16.

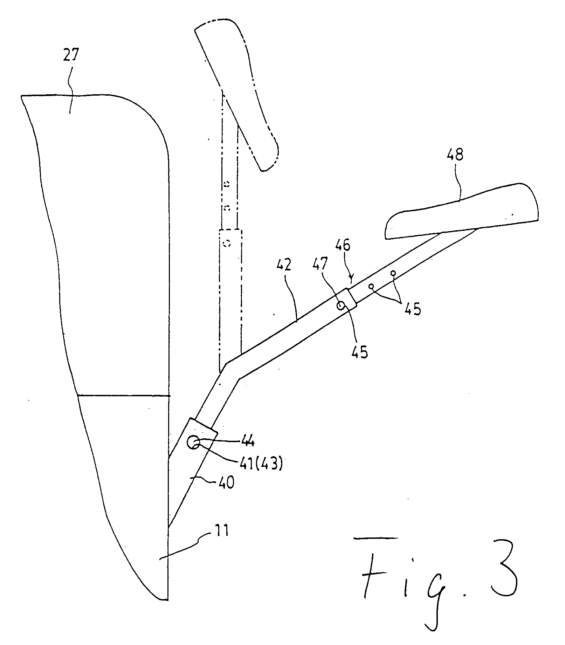

Referring now to Fig. 3, there is shown a seat device according to another embodiment of the present invention. A support portion 40 here has the form of a pipe, and a hole 41 is perforated in the support portion 40 and extends horizontally in a leftward and rightward direction while a pin fitting hole 43 corresponding to the hole 41 is perforated at a lower portion of a support post 42. A pin 44 is inserted in the hole 41 and pin fitting hole 43 to secure the support post 42 to the support portion 40.

The support post 42 is bent rearwardly at an intermediate portion thereof, and a slide element 46 is fitted for axial sliding movement in a top portion of the support post 42. The support post 42 has a horizontal hole formed therein while the slide element 46 has a plurality of, three in the embodiment shown, holes 45 perforated therein, and an adjusting pin 47 is inserted in the hole of the support post 42 and one of the holes 45 of the slide element 46 registered with the hole of the support post 42 to secure the slide element 46 and hence a seat 48 securely mounted at the top end of the slide element 42 with respect to the support post 42. Thus, the height or vertical position of the seat 48 can be adjusted suitably by selecting a suitable one of the holes 45 of the slide element 46 which is to be registered with the hole of the support post 42 so as to allow the adjusting pint 47 is to be inserted in position.

When the seat 48 is not to be used, the pin 44 of the support post 40 is first pulled off the support portion 40 and then the support post 42 is pivoted by 180 degrees either in the clockwise or counterclockwise direction around an obliquely rearwardly inclined axis of the support post 42 provided by the support element 40 from an operative position indicated by solid lines to an inoperative position indicated in phantom in Fig. 3. Thereupon, the seat 48 is turned over in a forward and backward direction as indicated by chain lines and the pin fitting hole 43 of the support plate 42 is registered with the hole 41 of the support portion 40. Then, the pin 44 is inserted into the thus registered hole 41 and pin hitting hole 43 thereby to secure the seat 48 with respect to the transmission case 11. The the orientation of the support portion 40 and the bent angle of the support post 42 may be suitably determined from the overall length of the support post 42, the position of the seat 48 at which an operator is to be heated on the seat 48, the pivoted position of the support post 42 and so forth.

Having now fully described the invention, it will be apparent to one of ordinary skill in the art that many changes and modifications can be made thereto without departing from the spirit and scope of the invention as set forth herein.

A seat device for a very small size shovel car which does not extend, when it is not used, rearwardly from a car body of the shovel car to improve the handling facility and the operability of the shovel car. The seat device comprises a support element mounted at a rear lower portion of the car body and a support post mounted on the support element for pivotal motion around a horizontal axis or an obliquely rearwardly inclined axis between an operative position in which it is directed upwardly rearwardly and a seat face of a seat mounted at the top end thereof is directed upwardly to allow an operator to be seated thereon and an inoperative position in which the support post extends vertically upwardly along the car body and the seat face of the seat is directed rearwardly. The support post is secured at each of the operative and inoperative positions by suitable securing means.

## Claims

1. A seat device for a shovel car having a car body with a transmission case mounted on a rear portion of said car body, comprising a support element (18) mounted at a rear lower portion of said car body, a support post (17) having a seat (16) on the top end thereof, said support post (17) being mounted on said support element (18) for swing-down motion between an operative position in which said support post is directed slantingly upwardly and a seat face of said seat is directed upwardly to allow an operator to be seated thereon, and an inoperative position,
**characterized in that**
in said inoperative position
- said support post (17) extends vertically upwardly along said car body of said shovel car,
- said seat face of said seat (16) is directed rearwardly, and
- securing means (25, 28, 29, 30) make secure said support post (17) at said operative and inoperative positions.

2. A seat device for a very small size shovel car according to claim 1,
**characterized in that**
said support post (17) is mounted for pivotal motion between the operative and inoperative positions around a horizontal axis at a top end portion of said support element (18).

3. A seat device for a very small size shovel car according to claim 1,
**characterized in that**
said securing means includes a stopper (25) provided on a forward portion of said support element (18) for securing said support post (17) at the operative position.

4. A seat device for a very small size shovel car according to claim 1,
**characterized in that**
said securing means (28, 29, 30) includes a manually operable lever (28) mounted for pivotal action on said seat, an arresting pin (30) provided on said support post (17) for engaging with said lever (28) to hold said seat (16) in the operative position, and another arresting member (31) provided on said car body (27) for engaging with said lever (28) to hold said seat (16) in the inoperative position.

5. A seat device for a very small size shovel car according to claim 1,
**characterized in that**
said support element (18) has a horizontal hole (23) formed therein while said support post has a plurality of holes (26) formed in a predetermined spaced relationship therein, and said support post (17) is supported for pivotal motion around a pin (24) which is inserted in said hole (23) of said support element and an arbitrary one of said support post (17) which is aligned with said hole (23) of said support element, said holes (26) of said support post providing different vertical positions of said seat (16) with respect to said car body.

6. A seat device for a shovel car having a car body with a transmission case mounted on a rear portion of said car body, comprising a support element (40) mounted at a rear lower portion of said car body, a seat (48), a support post (42) having said seat (48) secured to the top end thereof, said support post (42) being mounted on said support element for motion between an operative position in which said support post (42) is directed slantingly upwardly and the seat face of said seat (48) is directed upwardly to allow an operator to be seated thereon and an inoperative position,
**characterized in that**
in said inoperative position
- said support post (42) is revolving around 180° between said operative position and said inoperative position,
- said support post (42) extends vertically upwardly along said car body of said shovel car
- said seat face of said seat (48) is directed rearwardly, and
- securing means (44) make secure said support post at said operative and inoperative positions.

7. A seat device for a very small size shovel car according to claim 6,
**characterized in that**
said support post (42) is supported on said support element (40) for pivotal motion between the operative and inoperative positions around an obliquely rearwardly inclined axis provided by said support element (40).

8. A seat device for a very small size shovel car according to claim 6,
**characterized in that**
an upper portion of said support post (42) is bent obliquely laterally with respect to the other lower portion of said support post (42) which extends along the obliquely rearwardly inclined axis.

9. A seat device for a very small size shovel car according to claim 6,
**characterized in that**
said support element (40) has a horizontal hole (41) formed therein while said support post (42) has a corresponding hole (43) formed therein, and said securing means (44) includes a pin adapted to be inserted in said holes (41; 43) of said support element (40) and support post aligned with each other to secure said support post (42) to each of the operative and inoperative positions.

10. A seat device for a very small size shovel car according to claim 6,
**characterized in that**
said support post includes a first member supported on said support element, and a second member (46) mounted for relative movement on said first member and secured at a selected one of a plurality of positions with respect to said first member by fixing means (47), said seat securely mounted on said second member (46).

11. A seat device for a very small size shovel car according to claim 10,
**characterized in that**
said first member of said support post (42) has a hole formed therein while said second member has a plurality of holes (45) formed in a predetermined spaced relationship therein, and said fixing means includes a pin (47) inserted in said hole of said first member and an arbitrary one of said hole (45) of said second member (46), said holes of said second member providing a plurality of vertical positions of said seat with respect to said car body.

## Patentansprüche

1. Sitzvorrichtung für einen Löffelbagger, der eine Karosserie mit einem an einer Hinterseite der Karosserie montierten Getriebegehäuse aufweist, mit einem an einem hinteren unteren Abschnitt der Karosserie angebrachten Stützelement (18), einer Stützstange (17), die auf deren oberen Ende einen Sitz (16) aufweist, wobei die Stützstange (17) an dem Stützelement (18) montiert ist, und zwar für einen Abwärtsschwing-Bewegungsablauf zwischen einer gebrauchsfähigen Position, in welcher die Stützstange schräg nach oben gerichtet ist und die Sitzfläche des Sitzes nach oben gerichtet ist, damit sich eine Bedienperson darauf setzen kann, und einer nicht gebrauchsfähigen Position, dadurch gekennzeichnet, daß
in der nicht gebrauchsfähigen Position
- sich die Stützstange (17) entlang der Karosserie des Löffelbaggers senkrecht nach oben erstreckt,
- die Sitzfläche des Sitzes (16) nach hinten gerichtet ist, und
- eine Befestigungseinrichtung (25, 28, 29, 30) die Stützstange (17) in den gebrauchsfähigen und nicht gebrauchsfähigen Positionen festhält.

2. Sitzvorrichtung für einen Klein-Löffelbagger nach Anspruch 1,
dadurch gekennzeichnet, daß
die Stützstange (17) für einen Schwenkbewegungsablauf zwischen dem gebrauchsfähigen und dem nicht gebrauchsfähigen Positionen um eine horizontale Achse an einem oberen Endabschnitt des Stützelements (18) angebracht ist.

3. Sitzvorrichtung für einen Klein-Löffelbagger nach Anspruch 1,
dadurch gekennzeichnet, daß
die Befestigungseinrichtung einen Stopper (25) aufweist, welcher an einer nach vorne gerichteten Position des Stützelements (18) zum Festhalten der Stützstange (17) in der gebrauchsfähigen Position vorgesehen ist.

4. Sitzvorrichtung für einen Klein-Löffelbagger nach Anspruch 1,
dadurch gekennzeichnet, daß
die Befestigungseinrichtung (28, 29, 30) einen manuell bedienbaren Hebel (28) aufweist, welcher für einen Schwenkbewegungsablauf an dem Sitz angebracht ist, einen Feststellstift (30) aufweist, welcher an der Stützstange (17) vorgesehen ist, um mit dem Hebel (28) in Eingriff zu treten, um die Stützstange (17) in der gebrauchsfähigen Position zu halten, und ein weiteres Feststellelement (31) aufweist, welches an der Karosserie (27) vorgesehen ist, um mit dem Hebel (28) in Eingriff zu treten, um die Stützstange (17) in der nicht gebrauchsfähigen Position zu halten.

5. Sitzvorrichtung für einen Klein-Löffelbagger nach Anspruch 1,
dadurch gekennzeichnet, daß
das Stützelement (18) ein darin ausgebildetes horizontales Loch (23) aufweist, während die Stützstange eine Vielzahl von darin in vorbestimmt beabstandeter Beziehung ausgebildeten Löchern (26) aufweist, wobei die Stützstange (17) für einen Schwenkbewegungsablauf um einen Stift (24) gehalten ist, welcher in das Loch (23) des Stützelements aufgenommen ist und in ein mit dem Loch (23) des Stützelements ausgerichtetes beliebiges der Stützstange (17) aufgenommen ist, wobei die Löcher (26) des Stützelements unterschiedliche senkrechte Positionen des Sitzes (16) gegenüber der Karosserie schaffen.

6. Sitzvorrichtung für einen Löffelbagger, der eine Karosserie mit einem an einem Hinterabschnitt der Karosserie angebrachten Getriebegehäuse aufweist, mit einem an einem hinteren unteren Abschnitt der Karosserie angebrachten Stützelement (40), einem Sitz (48), einer Stützstange (42), an deren oberen Ende der Sitz (48) befestigt ist, wobei die Stützstange (42) an dem Stützelement für den Bewegungsablauf zwischen einer gebrauchsfähigen Position, in welcher die Stützstange (42) schräg nach oben gerichtet ist und die Sitzfläche des Sitzes (48) nach oben gerichtet ist, um einer Bedienperson sich zu gestatten, sich darauf zu setzen, und einer nicht gebrauchsfähigen Position angebracht ist,
dadurch gekennzeichnet, daß
in der nicht gebrauchsfähigen Position
- die Stützstange (42) zwischen der gebrauchsfähigen Position und der nicht gebrauchsfähigen Position um 180° gedreht wird,
- die Stützstange (42) sich entlang der Karosserie des Löffelbaggers vertikal nach oben erstreckt,
- die Sitzfläche des Sitzes (48) nach hinten gerichtet ist und
- eine Befestigungseinrichtung (44) die Stützstange in gebrauchsfähigen und nicht gebrauchsfähigen Positionen festhält.

7. Sitzvorrichtung für einen Klein-Löffelbagger nach Anspruch 6,
dadurch gekennzeichnet, daß
die Stützstange (42) für einen Schwenkbewegungsablauf zwischen den gebrauchsfähigen und nicht gebrauchsfähigen Positionen um eine schräg nach hinten geneigte, mittels dem Stützelement (40) vorgesehene Achse an dem Stützelement (40) gehalten ist.

8. Sitzvorrichtung für einen Klein-Löffelbagger nach Anspruch 6,
dadurch gekennzeichnet, daß
ein oberer Abschnitt der Stützstange (42) gegenüber dem anderen unteren Abschnitt der Stützstange (42), welche sich entlang der schräg nach hinten geneigten Achse erstreckt, schräg seitlich gebogen ist.

9. Sitzvorrichtung für einen Klein-Löffelbagger nach Anspruch 6,
dadurch gekennzeichnet, daß
das Stützelement (40) ein darin ausgebildetes horizontales Loch (41) hat, während die Stützstange (42) ein darin ausgebildetes entsprechendes Loch (43) aufweist, und die Befestigungseinrichtung (44) einen Stift aufweist, welcher in die Löcher (41; 43) des Stützelements (40) und der Stützstange aufgenommen werden kann, welche miteinander ausgerichtet sind, um die Stützstange (42) jeweils in der gebrauchsfähigen und nicht gebrauchsfähigen Position festzuhalten.

10. Sitzvorrichtung für einen Klein-Löffelbagger nach Anspruch 6,
dadurch gekennzeichnet, daß
die Stützstange ein auf dem Stützelement getragenes erstes Element und ein zweites Element (46) aufweist, welches für die relative Bewegung auf dem ersten Element angebracht ist und an einer aus einer Vielzahl von Positionen ausgewählten gegenüber dem ersten Element mittels einer Fixiereinrichtung (47) festgehalten ist, wobei der Sitz fest an dem zweiten Element (46) angebracht ist.

11. Sitzvorrichtung für einen Klein-Löffelbagger nach Anspruch 10,
dadurch gekennzeichnet, daß
das erste Element der Stützstange (42) ein darin ausgebildetes Loch aufweist, während das zweite Element eine Vielzahl von Löchern (45) aufweist, welche darin in einer vorbestimmt beabstandeten Beziehung ausgebildet sind und die Fixiereinrichtung einen Stift (47) aufweist, welcher in dem Loch des ersten Elements aufgenommen ist und in einem beliebigen Loch (45) des zweiten Elements (46) aufgenommen ist, wobei die Löcher des zweiten Elements eine Vielzahl von senkrechten Positionen des Sitzes gegenüber der Karosserie schaffen.

## Revendications

1. Dispositif de siège pour une pelleteuse possédant une carrosserie munie d'un carter de transmission monté sur une partie arrière de ladite carrosserie, comprenant un élément de support (18) montée sur une partie inférieure arrière de ladite carrosserie, un montant de support (17) possédant un siège (16) sur son extrémité supérieure, ledit montant de support (17) étant monté sur ledit élément de support (18) pour un basculement vers le bas entre une position fonctionnelle dans laquelle ledit montant de support (17) est dirigé en oblique vers le haut et une face dudit siège est dirigée vers le haut pour permettre à un opérateur de s'y asseoir, et une position non fonctionnelle,
dispositif caractérisé en ce que, dans ladite position non fonctionnelle :
- ledit montant de support (17) s'étend à la verticale vers le haut le long de ladite carrosserie de ladite pelleteuse;
- ladite face dudit siège (16) est dirigée vers l'arrière; et
- des moyens de fixation (25, 28, 29, 30) assurent la fixation dudit montant de support (17) dans lesdites positions fonctionnelle et non fonctionnelle.

2. Dispositif de siège pour une pelleteuse de très petite taille selon la revendication 1, caractérisé en ce que ledit montant de support (17) est monté à pivotement entre les positions fonctionnelle et non fonctionnelle autour d'un axe horizontal sur une partie d'extrémité supérieure dudit élément de support (18).

3. Dispositif de siège pour une pelleteuse de très petite taille selon la revendication 1, caractérisé en ce que ledit moyen de fixation comprend une butée (25) prévue sur une partie avant dudit élément de support (18) pour fixer ledit montant de support (17) sur la position fonctionnelle.

4. Dispositif de siège pour une pelleteuse de très petite taille selon la revendication 1, caractérisé en ce que ledit moyen de fixation (28, 29, 30) comprend un levier à actionnement manuel (28) monté pour un pivotement sur ledit siège, une broche d'arrêt (30) prévue sur ledit montant de support (17) pour coopérer avec ledit levier (28) afin de maintenir ledit siège (16) dans la position fonctionnelle, et une autre pièce d'arrêt (31) prévue sur ladite carrosserie (27) pour coopérer avec ledit levier (28) afin de maintenir ledit siège (16) dans la position non fonctionnelle.

5. Dispositif de siège pour une pelleteuse de très petite taille selon la revendication 1, caractérisé en ce que ledit élément de support (18) possède un trou horizontal (23) tandis que ledit montant de support (17) possède une pluralité de trous (26) formés selon un espacement prédéterminé, et ledit montant de support (17) est supporté à pivotement autour d'un axe (24) qui est inséré dans ledit trou (23) dudit élément de support (18) et dans un trou arbitraire dudit montant de support (17) qui est aligné avec ledit trou (23) dudit élément de support (18), lesdits trous (26) dudit montant de support (17) conférant différentes positions verticales audit siège (16) par rapport à ladite carrosserie.

6. Dispositif de siège pour une pelleteuse possédant une carrosserie munie d'un carter de transmission monté sur une partie arrière de ladite carrosserie, dispositif comprenant un élément de support (40) monté sur une partie inférieure arrière de ladite carrosserie, un siège (48), un montant de support (42) muni dudit siège (48) fixé sur son extrémité supérieure, ledit montant de support (42) étant sur ledit élément de support (40) pour un déplacement entre une position fonctionnelle dans laquelle ledit montant de support (42) est dirigé en oblique vers le haut et la face dudit siège (48) est dirigée vers le haut pour permettre à un opérateur de s'y asseoir, et une position non fonctionnelle,
dispositif caractérisé en ce que, dans la position non fonctionnelle :
- ledit montant de support (42) est tourné sur 180° entre ladite position fonctionnelle et ladite position non fonctionnelle;
- ledit montant de support (42) s'étend à la verticale vers le haut le long de ladite carrosserie de ladite pelleteuse;
- ladite face dudit siège (48) est dirigée vers l'arrière; et
- un moyen de fixation (44) assure la fixation dudit montant de support (42) sur lesdites positions fonctionnelle et non fonctionnelle.

7. Dispositif de siège pour une pelleteuse de très petite taille selon la revendication 6, caractérisé en ce que ledit montant de support (42) est supporté par ledit élément de support (40) pour un pivotement entre les positions fonctionnelle et non fonctionnelle autour d'un axe incliné en oblique vers l'arrière prévu sur ledit élément de support (40).

8. Dispositif de siège pour une pelleteuse de très petite taille selon la revendication 6, caractérisé en ce que une partie supérieure dudit montant de support (42) est courbée en oblique latéralement par rapport à l'autre partie inférieure dudit montant de support (42) qui s'étend le long de l'axe incliné en oblique vers l'arrière.

9. Dispositif de siège pour une pelleteuse de très petite taille selon la revendication 6, caractérisé en ce que ledit élément de support (40) possède un trou horizontal (41) tandis que ledit montant de support (42) possède un trou correspondant (43), et ledit moyen de fixation (44) comprend un axe prévu pour être inséré dans lesdits trous (41; 43) dudit élément de support (40) et dudit montant de support (42) respectivement alignés pour fixer ledit montant de support (42) sur chacune des positions fonctionnelle et non fonctionnelle.

10. Dispositif de siège pour une pelleteuse de très petite taille selon la revendication 6, caractérisé en ce que ledit montant de support (42) comprend une première pièce supportée sur ledit élément de support (40), et une seconde pièce (46) montée pour un déplacement relatif sur ladite première pièce et fixée sur une position choisie d'une pluralité de positions par rapport à ladite première pièce par un moyen de fixation (47), ledit siège étant fixé sur ladite seconde pièce (46).

11. Dispositif de siège pour une pelleteuse de très petite taille selon la revendication 10, caractérisé en ce que ladite première pièce dudit montant de support (42) possède un trou tandis que ladite seconde pièce possède une pluralité de trous (45) formés selon un espacement prédéterminé, et ledit moyen de fixation comprend un axe (47) inséré dans ledit trou de ladite première pièce et dans un trou arbitraire desdits trous (45) de ladite seconde pièce (46), lesdits trous de ladite seconde pièce conférant une pluralité de positions verticales audit siège par rapport à ladite carrosserie.
